# EUROPEAN PATENT APPLICATION

(11) **EP 4 418 088 A1**
(43) Date of publication of application: **21.08.2024**
(21) Application number: 24156833.6
(22) Date of filing: 09.02.2024
(51) Int. Cl.: G06F 3/044, G06F 3/041

(54) **DISPLAY DEVICE**

(30) Priority: 14.02.2023 KR 20230019634; 18.05.2023 KR 20230064129
(71) Applicant: Samsung Display Co., Ltd., Yongin-si, Gyeonggi-do 17113 (KR)
(72) Inventor: YANG, SUNG-JIN, 17113 Giheung-Gu, Yongin-si (KR); PARK, HYUNSIK, 17113 Giheung-Gu, Yongin-si (KR); LEE, MINCHAN, 17113 Giheung-Gu, Yongin-si (KR)
(74) Representative: Dr. Weitzel & Partner

(57) **Abstract**

A display device includes a display panel and an input sensor on the display panel. The input sensor includes a first insulating layer, a sensing electrode, and a signal line electrically connected to the sensing electrode and under the first insulating layer. The signal line includes a first metal layer and a second metal layer on the first metal layer. The first metal layer has higher electrical conductivity than the second metal layer, and the second metal layer has a higher hardness than the first metal layer. A dummy electrode is between sensing electrodes. The dummy electrode includes a plurality of portions spaced apart from each other.

## Description

### BACKGROUND

### 1. Field

Embodiments of the present invention described herein relate to a display device, and, for example, relate to a display device including an input sensor.

### 2. Description of Related Art

Various display devices that are utilized in multimedia devices, such as televisions, mobile phones, tablet computers, car navigation units, game machines, and/or the like, are being developed. The display devices may include a keyboard or a mouse as an input device. In addition, the display devices may include an input sensor, such as a touch panel, as an input device.

### SUMMARY

The invention is defined by independent claim 1. Aspects of one or more embodiments of the present invention provide a display device including an input sensor having a reduced defect rate.

Aspects of one or more embodiments of the present invention provide a display device including an input sensor for suppressing or reducing a decrease in sensing sensitivity.

Additional aspects will be set forth in part in the description which follows and, in part, will be apparent from the description, or may be learned by practice of the presented embodiments of the invention.

According to the present invention, a display device includes a display panel and an input sensor on the display panel. The input sensor includes a first insulating layer, a sensing electrode, and a signal line electrically connected to the sensing electrode and under the first insulating layer. The signal line includes a first metal layer including an aluminum-neodymium alloy (AlNd) and a second metal layer on the first metal layer and that includes a molybdenum-niobium alloy (MoNb). The sensing electrode includes a sensing pattern on the first insulating layer, the sensing pattern including indium tin oxide (ITO) and a bridge pattern under the first insulating layer and electrically connected to the sensing pattern, the bridge pattern including the molybdenum-niobium alloy (MoNb).

In one or more embodiments, the input sensor may further include a second insulating layer covering the sensing pattern and on the first insulating layer, and the second insulating layer may include silicon oxide, silicon nitride, or silicon oxynitride.

In one or more embodiments, the signal line may further include an contact hole contact hole between the first metal layer and the second metal layer, the anti-oxidation layer including aluminum fluoride (AlF₃).

In one or more embodiments, the bridge pattern and the first metal layer may be on the same insulating layer.

In one or more embodiments, the bridge pattern may have a single-layer structure, and the first metal layer may have a two-layer structure.

In one or more embodiments, the sensing pattern and the bridge pattern may define an ohmic contact through a contact hole defined in the first insulating layer.

In one or more embodiments, the second metal layer may cover a side surface and an upper surface of the first metal layer.

In one or more embodiments, the first insulating layer may make contact with the second metal layer and may include silicon nitride, silicon oxide, or silicon oxynitride.

In one or more embodiments, the input sensor may further include a first dummy electrode and a second dummy electrode. The sensing electrode may include a first sensing electrode including a first sensing pattern, a second sensing pattern spaced and/or apart from (*e.g.*, separated from or spaced apart from) the first sensing pattern in a first direction, and a bridge connecting the first sensing pattern and the second sensing pattern and a second sensing electrode including a first sensing part, a second sensing part, and an intermediate part between the first sensing part and the second sensing part in a second direction crossing the first direction and between the first sensing pattern and the second sensing pattern in the first direction. The first dummy electrode may be between the first sensing pattern and the first sensing part in a plan view and may include a plurality of first portions spaced and/or apart from (*e.g*., separated from or spaced apart from) each other. The second dummy electrode may be between the first sensing pattern and the second sensing part in the plan view and may include a plurality of second portions spaced and/or apart from (*e.g*., separated from or spaced apart from) each other. A total number of first portions and a total number of second portions may differ from each other.

In one or more embodiments, the input sensor may further include a first dummy electrode and a second dummy electrode. The sensing electrode may include a first sensing electrode including a first sensing pattern, a second sensing pattern spaced and/or apart from (*e.g*., separated from or spaced apart from) the first sensing pattern in a first direction, and a bridge connecting the first sensing pattern and the second sensing pattern and a second sensing electrode including a first sensing part, a second sensing part, and an intermediate part between the first sensing part and the second sensing part in a second direction crossing the first direction and between the first sensing pattern and the second sensing pattern in the first direction. The first dummy electrode may be between the first sensing pattern and the first sensing part in a plan view and may include a plurality of first portions spaced and/or apart from (*e.g*., separated from or spaced apart from) each other. The second dummy electrode may be between the first sensing pattern and the second sensing part the plan view and may include a plurality of second portions spaced and/or apart from (*e.g.,* separated from or spaced apart from) each other. An arrangement of the plurality of first portions and an arrangement of the plurality of second portions may be asymmetrical to each other with respect to a virtual line that is parallel (*e.g*., substantially parallel) to the first direction and that passes through a center of a region defined by the first sensing part, the second sensing part, the first sensing pattern, and the second sensing pattern.

In one or more embodiments, the display panel may include a plurality of light emitting elements, and the sensing electrode may overlap a corresponding light emitting element among the plurality of light emitting elements.

According to one or more embodiments of the present invention, a display device includes a display panel and an input sensor on the display panel. The input sensor includes a first insulating layer, a sensing electrode, and a signal line electrically connected to the sensing electrode and under the first insulating layer. The signal line includes a first metal layer including an aluminum alloy and a second metal layer on the first metal layer, the second metal layer including a molybdenum alloy. The sensing electrode includes a sensing pattern on the first insulating layer, the sensing pattern including a transparent conductive oxide and a bridge pattern under the first insulating layer and electrically connected to the sensing pattern, the bridge pattern including the molybdenum alloy.

In one or more embodiments, the signal line may further include an anti-oxidation layer between the first metal layer and the second metal layer, the anti-oxidation layer including aluminum fluoride (AlF₃).

According to one or more embodiments of the present invention, a display device includes a display panel and an input sensor on the display panel. The input sensor includes a first sensing electrode including a first sensing pattern, a second sensing pattern spaced and/or apart from (*e.g*., separated from or spaced apart from) the first sensing pattern in a first direction, and a bridge connecting the first sensing pattern and the second sensing pattern, a second sensing electrode including a first sensing part, a second sensing part, and an intermediate part between the first sensing part and the second sensing part in a second direction crossing the first direction and between the first sensing pattern and the second sensing pattern in the first direction, a first dummy electrode between the first sensing pattern and the first sensing part in a plan view, a second dummy electrode between the first sensing pattern and the second sensing part in a plan view, and an insulating layer. The first dummy electrode includes a plurality of first portions spaced and/or apart from (*e.g*., separated from or spaced apart from) each other. The second dummy electrode includes a plurality of second portions spaced and/or apart from (*e.g.,* separated from or spaced apar from) each other. The first portions have different areas and shapes from each other, and the second portions have different areas and shapes from each other.

In one or more embodiments, some of the first portions and some of the second portions may be symmetrical to each other with respect to a virtual line substantially parallel to the first direction and that passes through a center of a region defined by the first sensing part, the second sensing part, the first sensing pattern, and the second sensing pattern.

In one or more embodiments, the first sensing pattern may include a pattern edge facing the first sensing part. The first sensing part may include a part edge facing the first sensing pattern. A gap between the pattern edge and the part edge may increase farther away from the intermediate part.

In one or more embodiments, the pattern edge may include a first component extending in a first oblique direction and a second component extending from the first component in a second oblique direction different from the first oblique direction. One first portion among the plurality of first portions may include a first edge extending in the first oblique direction and a second edge extending in the second oblique direction.

In one or more embodiments, the part edge may include a third component extending in a third oblique direction and a fourth component extending from the third component in a fourth oblique direction different from the third oblique direction. Another first portion among the plurality of first portions may include a third edge extending in the third oblique direction and a fourth edge extending in the fourth oblique direction.

In one or more embodiments, the one first portion and the other first portion may be adjacent to each other, and a boundary region between the one first portion and the other first portion may include a region extending in the first oblique direction and a region extending in the second oblique direction.

In one or more embodiments, an opening may be defined in the intermediate part. The bridge may include a first bridge pattern in the opening, a second bridge pattern connecting the first bridge pattern and the first sensing pattern, and a third bridge pattern connecting the first bridge pattern and the second sensing pattern. The first bridge pattern may be on the insulating layer, and the second bridge pattern and the third bridge pattern may be under the insulating layer. The first bridge pattern may include a transparent conductive oxide, and the second bridge pattern and the third bridge pattern may include a metal.

### BRIEF DESCRIPTION OF THE DRAWINGS

The above and other aspects, objects and/or features of certain embodiments of the present invention will be more apparent from the following description taken in conjunction with the accompanying drawings.
FIG. 1A is a perspective view of an electronic device according to one or more embodiments of the present invention.
FIG. 1B is an exploded perspective view of the electronic device illustrated in FIG. 1A, according to one or more embodiments of the present invention.
FIG. 1C is a cross-sectional view of a display device taken along line I-I' of FIG. 1B, according to one or more embodiments of the present invention.
FIG. 1D is a cross-sectional view of a display substrate taken along line II-II' of FIG. 1B, according to one or more embodiments of the present invention.
FIGs. 2A - 2D are cross-sectional views illustrating a manufacturing method of the display device according to one or more embodiments of the present invention.
FIG. 3 is a plan view of an input sensor according to one or more embodiments of the present invention.
FIG. 4A is a plan view of a first region A1 of FIG. 3, according to one or more embodiments of the present invention.
FIG. 4B is a cross-sectional view corresponding to line III-III' of FIG. 4A, according to one or more embodiments of the present invention.
FIG. 5A is a plan view of a second region A2 of FIG. 3, according to one or more embodiments of the present invention.
FIG. 5B is a cross-sectional view taken along line IV-IV' of FIG. 5A, according to one or more embodiments of the present invention.
FIG. 5C is an image of a signal line according to one or more embodiments of the present invention.
FIG. 6A is a cross-sectional view of a signal line according to a comparative example.
FIG. 6B is an image of the signal line according to the comparative example.
FIG. 7A is a cross-sectional view of a signal line according to a comparative example.
FIG. 7B is an image of the signal line according to the comparative example.
FIG. 8 is a cross-sectional view of a signal line according to one or more embodiments of the present invention.
FIGs. 9A - 9E are cross-sectional views illustrating a manufacturing process of the signal line according to one or more embodiments of the present invention.
FIG. 10 is a graph depicting a change in the sheet resistance of a first metal layer in a standby state after the first metal layer of FIG. 9A is formed.
FIG. 11 is a graph obtained by analyzing ion concentrations of niobium oxides of signal lines.
FIG. 12 is a plan view illustrating a portion of a sensing region according to one or more embodiments of the present invention.
FIG. 13 is a plan view illustrating a unit region according to one or more embodiments of the present invention.
FIG. 14 is an enlarged plan view of a first region UA1 of FIG. 13, according to one or more embodiments of the present invention.
FIG. 15 is an enlarged plan view of a partial region of FIG. 14, according to one or more embodiments of the present invention.
FIG. 16 is a plan view illustrating a unit region according to one or more embodiments of the present invention.

### DETAILED DESCRIPTION

The illustrated embodiments are provided as examples so that this invention will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Unless otherwise noted, like reference numerals denote like elements throughout the attached drawings and the written description, and thus, duplicative descriptions thereof may not be provided. Additionally, in the drawings, the thicknesses, proportions, and dimensions of components may be exaggerated for effective description. As used herein, the term "and/or" includes any and all combinations of one or more of the associated listed items.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

As used herein, the singular forms "a," "an" and "the" are intended to include the plural forms as well, unless the context clearly indicates otherwise.

Spatially relative terms, such as "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

Unless otherwise apparent from the invention, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, embodiments of the present invention will be described with reference to the accompanying drawings.

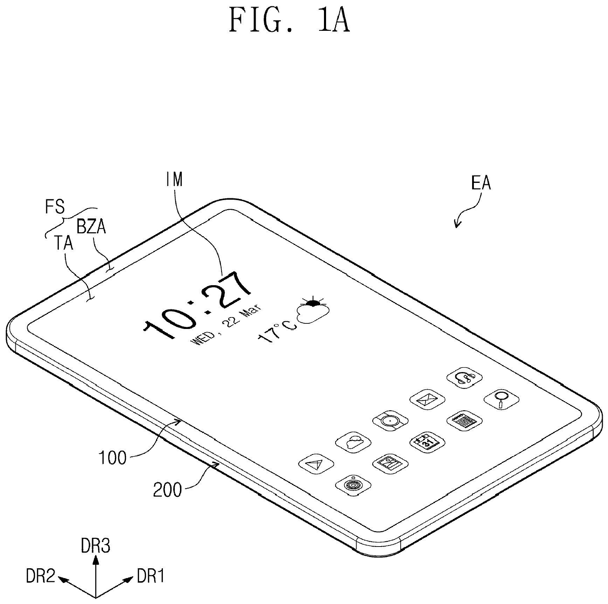

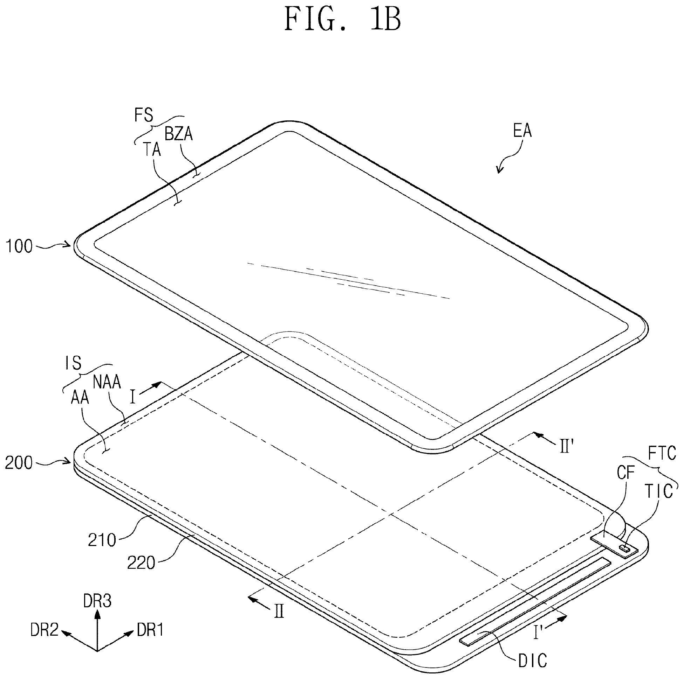

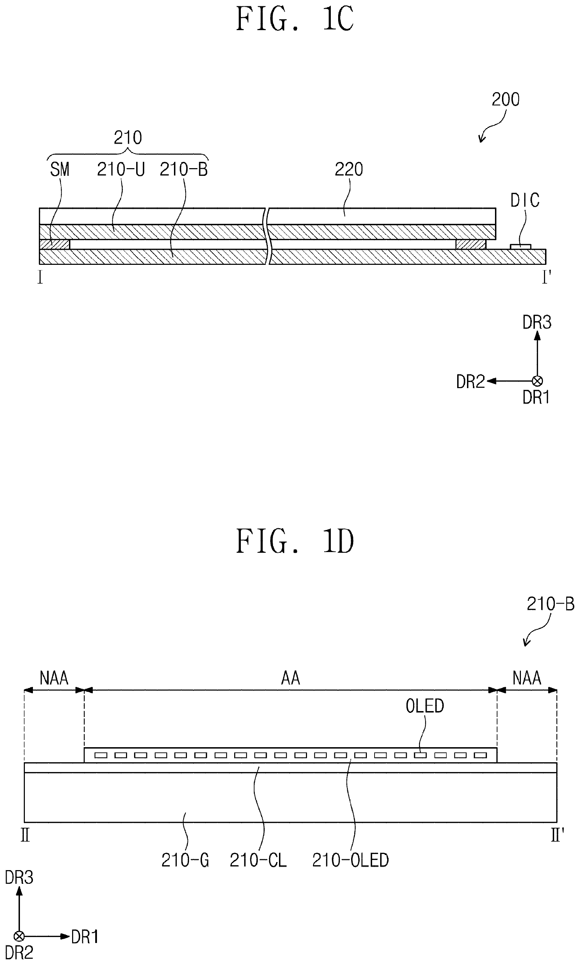

FIG. 1A is a perspective view of an electronic device EA, including a display device 200, according to one or more embodiments of the present invention. FIG. 1B is an exploded perspective view of the electronic device EA illustrated in FIG. 1A, according to one or more embodiments of the present invention. FIG. 1C is a cross-sectional view taken along line I-I' of FIG. 1B, according to one or more embodiments of the present invention. FIG. 1D is a cross-sectional view of a display substrate 210-B taken along line II-II' of FIG. 1B, according to one or more embodiments of the present invention. Hereinafter, the electronic device EA according to one or more embodiments will be described with reference to FIGs. 1A to 1D.

Referring to FIG. 1A, the electronic device EA may be activated depending on an electrical signal. The electronic device EA may include one or more suitable embodiments. For example, the electronic device EA may include a tablet computer, a notebook computer, a computer, a smart television, a display for a vehicle, and/or the like. In the present embodiment(s), the electronic device EA is illustrated as a tablet computer.

The electronic device EA may display an image IM through a display surface FS. The display surface FS is parallel (e.g., substantially parallel) to a plane defined by a first direction DR1 and a second direction DR2. The normal direction of the display surface FS, for example, the thickness direction of the electronic device EA is indicated by a third direction DR3. Front surfaces (or, upper surfaces) and rear surfaces (or, lower surfaces) of members or units that will be described below are distinguished from each other based on the third direction DR3. Hereinafter, the first to third directions DR1, DR2, and DR3 are defined as directions indicated by first to third directional axes, respectively, and the first to third directional axes are denoted by the same reference numerals as those of the first to third directions DR1, DR2, and DR3.

The display surface FS on which the image IM is displayed may correspond to a front surface of the electronic device EA and may correspond to a front surface FS of a window member 100 that will be described in more detail below with reference to FIG. 1B. Hereinafter, the display surface (or, the front surface) of the electronic device EA and the front surface of the window member 100 are denoted by the same reference numeral. In FIG. 1A, a clock and a plurality of icons are illustrated as an example of the image IM.

Referring to FIG. 1B, the electronic device EA includes the window member 100 and a display device 200. The electronic device EA may further include an optical member disposed between the window member 100 and the display device 200. The optical member may include a polarizer. In one or more embodiments of the present invention, the optical member may include a color filter member that lowers the reflectance of external light.

The window member 100 includes a base panel. For example, the base panel may be implemented with glass, plastic, or a combination thereof. The front surface FS of the window member 100 includes a transmissive region TA and a bezel region BZA. The transmissive region TA may be an optically transparent region. For example, the transmissive region TA may be a region having a visible light transmittance of about 90% or more.

The bezel region BZA may be a region having a lower light transmittance than the transmissive region TA. The bezel region BZA defines the shape of the transmissive region TA. The bezel region BZA may be adjacent to the transmissive region TA and may be around (*e.g.*, surround) the transmissive region TA. The window member 100 may include a light blocking pattern that is disposed on the base panel and that defines the bezel region BZA.

The bezel region BZA may have a predetermined color. The bezel region BZA may cover a peripheral region NAA of the display device 200 and may interrupt visibility of the peripheral region NAA from the outside. In the window member 100 according to one or more embodiments of the present invention, the bezel region BZA may be reduced or omitted (*e.g*., may not be provided).

The display device 200 may generate the image IM (as shown, *e.g*., in FIG. 1A) and may sense an external input. A front surface FS of the display device 200 includes an active region AA and the peripheral region NAA. The active region AA may be activated depending on an electrical signal.

In one or more embodiments, the active region AA may be a region where the image IM is displayed and the external input is sensed at substantially the same time. The active region AA corresponds to the transmissive region TA, and the peripheral region NAA corresponds to the bezel region BZA. The expression "one region/portion corresponds to another region/portion" used herein means that "the regions/portions overlap each other," but the present invention is not limited to the regions having the same area and/or the same shape.

Referring to FIGs. 1B and 1C, the display device 200 includes a display panel 210, an input sensor 220, a drive circuit DIC, and a circuit module FTC.

The display panel 210 may be an organic light emitting display panel or an inorganic light emitting display panel. The panels are distinguished from each other based on constituent materials of light emitting elements. An emissive layer of the organic light emitting display panel may include an organic light emitting material. An emissive layer of the inorganic light emitting display panel may include quantum dots and/or quantum rods. Hereinafter, as an example, the display panel 210 will be described as an organic light emitting display panel.

The input sensor 220 senses an external input applied from the outside. The external input may be a touch of a user or an input of a stylus pen. In one or more embodiments, the input sensor 220 may be a capacitive touch sensor; however, the present invention is not particularly limited thereto.

The drive circuit DIC is disposed on the display panel 210. The drive circuit DIC may be mounted on the display panel 210. The drive circuit DIC is electrically connected to the display panel 210 and provides, to the display panel 210, an electrical signal for driving the display panel 210.

The circuit module FTC is electrically connected to the input sensor 220. In one or more embodiments, the circuit module FTC may include a flexible circuit board CF and a sensor drive circuit TIC. The flexible circuit board CF includes an insulating layer and a plurality of lines. The lines electrically connect the input sensor 220 and the sensor drive circuit TIC. The sensor drive circuit TIC may be mounted on the flexible circuit board CF in a chip-on film form.

The circuit module FTC may connect the input sensor 220 and the display panel 210. The sensor drive circuit TIC may be omitted (*e.g.*, may not be provided). In one or more embodiments of the present invention, the sensor drive circuit TIC and the drive circuit DIC may be integrated.

Referring to FIG. 1C, the display panel 210 includes the display substrate 210-B, an encapsulation substrate 210-U, and a sealing member SM that bonds the display substrate 210-B and the encapsulation substrate 210-U. The display substrate 210-B includes pixels that substantially generate an image. The encapsulation substrate 210-U seals the pixels and prevents or reduces damage to the pixels due to external moisture, oxygen, and/or the like.

The drive circuit DIC may be coupled to the display substrate 210-B. The drive circuit DIC may be provided in the form of an integrated circuit. However, without being limited thereto, the drive circuit DIC might not be disposed on the display substrate 210-B in one or more embodiments of the present invention. The drive circuit DIC may be mounted on a circuit board connected to the display substrate 210-B.

The display substrate 210-B and the encapsulation substrate 210-U may include a glass substrate as a base substrate. The display substrate 210-B may not direct contact the encapsulation substrate 210-U. A sealing member SM may be located between the display substrate 210-B and the encapsulation substrate 210-U. The display substrate 210-B may have a larger area than the encapsulation substrate 210-U. The drive circuit DIC may be disposed on a partial region of the display substrate 210-B exposed from the encapsulation substrate 210-U (*e.g*., a partial region not overlapping the encapsulation substrate in the third direction DR3). However, without being limited thereto, the display substrate 210-B and the encapsulation substrate 210-U may have substantially the same shape in one or more embodiments of the present invention.

The sealing member SM may include, for example, a frit. The frit is a ceramic adhesive material and has a property of being cured after exposure. The frit may include 15 wt% to 40 wt% of V₂O₅, 10 wt% to 30 wt% of TeO₂, 1 wt% to 15 wt% of P₂O₅, 1 wt% to 15 wt% of BaO, 1 wt% to 20 wt% of ZnO, 5 wt% to 30 wt% of ZrO₂, and 5 wt% to 20 wt% of WO₃ as main ingredients and may include at least one of Fe₂O₃, CuO, MnO, AL₂O₃, Na₂O, or Nb₂O₅ as an additive. The sealing member SM overlaps the peripheral region NAA.

Referring to FIG. 1D, the display substrate 210-B includes a base substrate 210-G, a circuit element layer 210-CL disposed on the base substrate 210-G, and a display element layer 210-OLED disposed on the circuit element layer 210-CL. The display substrate 210-B may further include a capping layer or an encapsulation layer that covers the display element layer 210-OLED.

The base substrate 210-G may include a glass substrate, a metal substrate, or an organic/inorganic composite substrate. The circuit element layer 210-CL includes at least one insulating layer and a circuit element. The insulating layer includes at least one inorganic layer and at least one organic layer. The circuit element includes signal lines and a pixel drive circuit. The pixel drive circuit may be provided for each of the pixels. The display element layer 210-OLED may include light emitting elements OLED. The light emitting elements OLED may be provided for the respective pixels. Under the control of the pixel drive circuits, the light emitting elements OLED may be turned on/off, and the luminance of light may be determined. The light emitting elements OLED may include organic light emitting diodes.

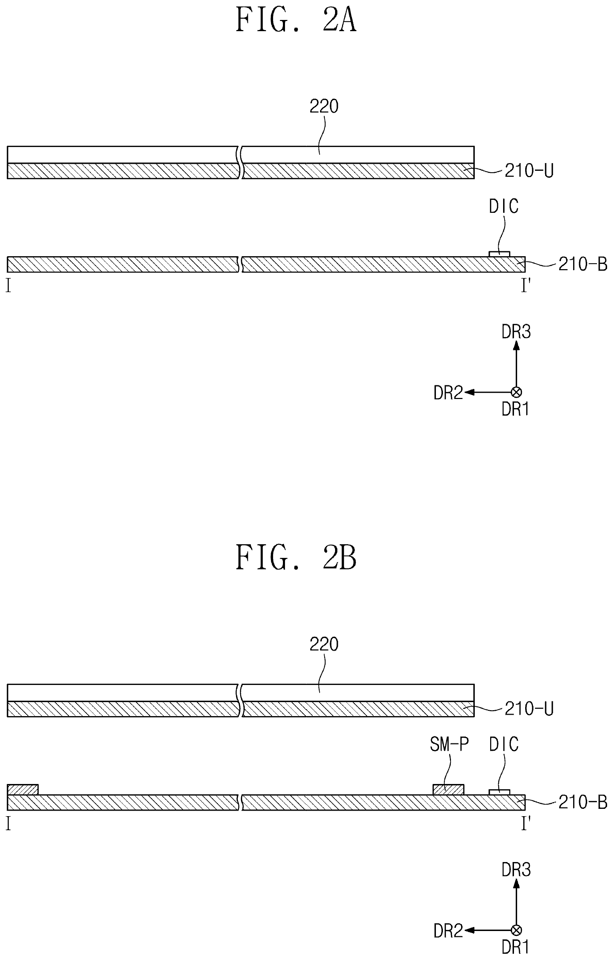

FIGs. 2A to 2D are cross-sectional views illustrating a manufacturing method of the display device 200 according to one or more embodiments of the present invention.

First, as illustrated in FIG. 2A, the display substrate 210-B and the input sensor 220 are prepared. Although the display substrate 210-B having the drive circuit DIC mounted thereon is illustrated as an example, the present invention is not limited thereto. The drive circuit DIC may be omitted (*e.g*., may not be provided) in the current step (*e.g*., act or task) and may be mounted on the display substrate 210-B after the manufacturing process to be described in more detail below. The encapsulation substrate 210-U may be a base substrate on which the input sensor 220 is formed. The input sensor 220 is formed on one surface of the encapsulation substrate 210-U.

As illustrated in FIG. 2B, a sealing composition SM-P is provided between the display substrate 210-B and the encapsulation substrate 210-U. The sealing composition SM-P is provided on/in the peripheral region NAA of the circuit element layer 210-CL illustrated in FIG. 1D. Thereafter, the encapsulation substrate 210-U is aligned on the display substrate 210-B. One surface of the encapsulation substrate 210-U on which the input sensor 220 is not disposed may face the sealing composition SM-P.

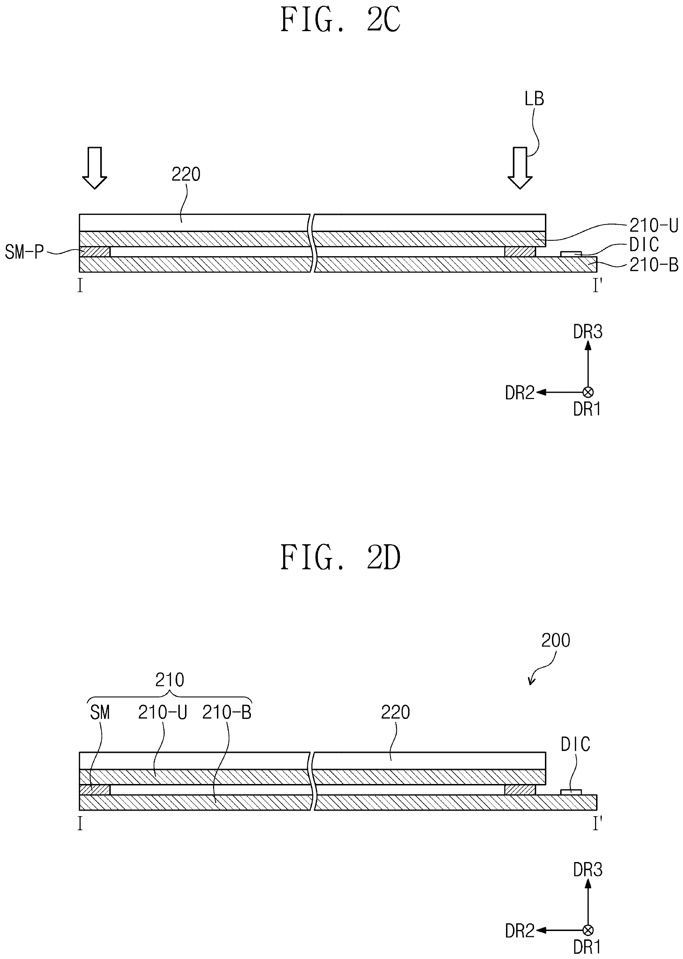

As illustrated in FIG. 2C, a laser beam LB is applied to the sealing composition SM-P from above the input sensor 220. The sealing composition SM-P exposed to the laser beam LB is cured.

As illustrated in FIG. 2D, the cured sealing composition SM-P (see FIG. 2C) forms the sealing member SM. The encapsulation substrate 210-U seals the display element layer 210-OLED of FIG. 1D and protects and/or substantially protects the organic light emitting diodes from external moisture and/or oxygen.

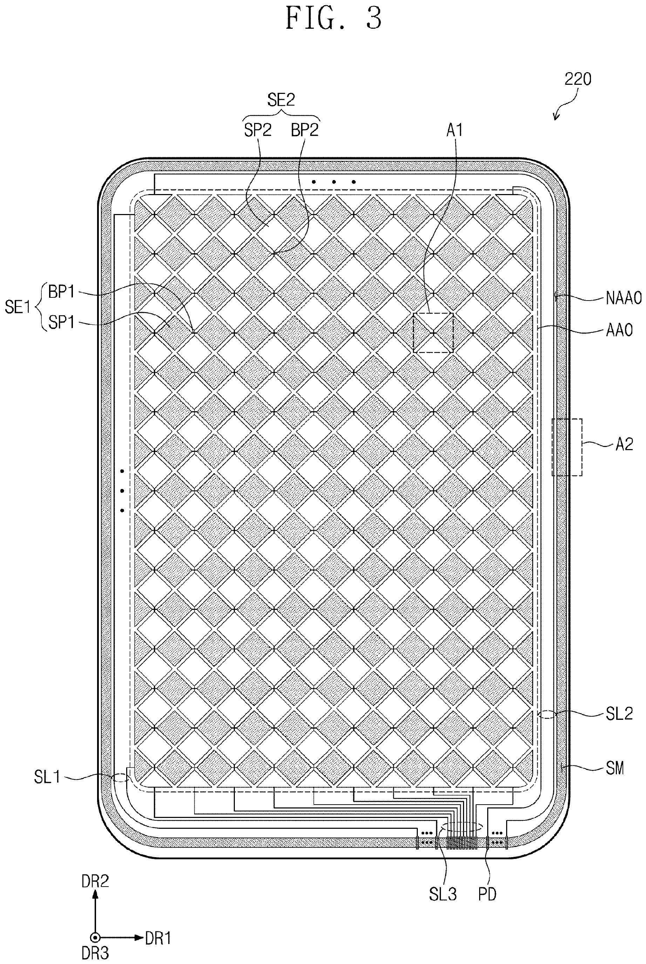

FIG. 3 is a plan view of the input sensor 220 according to one or more embodiments of the present invention. A sensing region AA0 and a non-sensing region NAA0 of the input sensor 220 that correspond to the active region AA and the peripheral region NAA of the display panel 210 of FIG. 1B are illustrated in FIG. 3. The sensing region AA0 and the non-sensing region NAA0 are defined on an upper surface of the encapsulation substrate 210-U of FIG. 1C.

The input sensor 220 may include a plurality of sensing electrodes SE1 and SE2, also called as first sensing electrode SE1 and second sensing electrode SE2, and a plurality of signal lines SL1, SL2, and SL3 connected to the plurality of sensing electrodes SE1 and SE2. The sensing electrodes SE1 and SE2 are disposed in the sensing region AA0. The sensing electrodes SE1 and SE2 may include the plurality of first sensing electrodes SE1 and the plurality of second sensing electrodes SE2 crossing each other.

In one or more embodiments, the first sensing electrodes SE1 may extend in the first direction DR1 and may be arranged in the second direction DR2. Each of the first sensing electrodes SE1 may include a plurality of sensing parts SP1 (hereinafter, in particular referred to as the first group of sensing parts SP!) and a plurality of intermediate parts BP1 (hereinafter, in particular referred to as the first group of intermediate parts BP1) arranged in the first direction DR1. The second sensing electrodes SE2 may extend in the second direction DR2 and may be arranged in the first direction DR1. Each of the second sensing electrodes SE2 may include a plurality of sensing parts SP2 (hereinafter, in particular referred to as the second group of sensing parts SP2) and a plurality of intermediate parts BP2 (hereinafter, in particular referred to as the second group of intermediate parts BP2) arranged in the second direction DR2.

The above-described terms "first sensing electrodes SE1 and second sensing electrodes SE2" are only terms defined to distinguish the two types (or kinds) of electrodes and do not have special meanings. In one or more embodiments of the present invention, the electrodes extending in the first direction DR1 may be defined as the first sensing electrodes, and the electrodes extending in the second direction DR2 may be defined as the second sensing electrodes. In one or more embodiments of the present invention, the input sensor 220 may include only one type (or kind) of sensing electrodes. The input sensor 220 may sense an external input by a self-cap type (or kind).

The signal lines SL1, SL2, and SL3 are disposed in the non-sensing region NAA0. The signal lines SL1, SL2, and SL3 may include the plurality of first signal lines SL1, the plurality of second signal lines SL2, and the plurality of third signal lines SL3. The terms "first signal lines SL1, second signal lines SL2, and third signal lines SL3" are only terms defined to distinguish the three types (or kinds) of signal lines and do not have special meanings. Pads PD are connected to ends of the respective signal lines SL1, SL2, and SL3. As illustrated in FIG. 3, the pads PD may be aligned in the first direction DR1.

The first signal lines SL1 are electrically connected to first ends of the first sensing electrodes SE1, respectively. The second signal lines SL2 are electrically connected to first ends of the second sensing electrodes SE2, respectively. The third signal lines SL3 are electrically connected to second ends of the second sensing electrodes SE2, respectively. As will be described in more detail below, each of the signal lines SL1, SL2, and SL3 and a corresponding sensing electrode SE1 or SE2 may be disposed on different layers. The expression "the signal lines are electrically connected to the corresponding sensing electrodes" used herein may mean that the signal lines and the corresponding sensing electrodes are integrally formed and/or brought into contact with each other through contact holes penetrating an insulating layer.

A connection relationship between the sensing electrodes SE1 and SE2 and the signal lines SL1, SL2, and SL3 is not limited to the above description. According to one or more embodiments of the present invention, the second signal lines SL2 may be omitted (*e.g.,* may not be provided), or the third signal lines SL3 may be omitted (*e.g.*, may not be provided). According to one or more embodiments of the present invention, the input sensor 220 may further include signal lines that are connected to second ends of the first sensing electrodes SE1. In one or more embodiments, one of the second signal lines SL2 and the third signal lines SL3 may be omitted (*e.g*., may not be provided).

According to one or more embodiments, the second sensing electrodes SE2 may receive drive signals through the second signal lines SL2 and the third signal lines SL3 (hereinafter, in particular referred to as the TX electrode function). The sensor drive circuit TIC (as shown, *e.g*., in FIG. 1B) may receive detection signals through the first signal lines SL1 (hereinafter, in particular referred to as the RX electrode function). The sensor drive circuit TIC may measure the amount of change in mutual capacitance between the first sensing electrodes SE1 and the second sensing electrodes SE2 through the detection signals. However, without being limited thereto, the TX electrode function of the second sensing electrodes SE2 and the RX electrode function of the first sensing electrodes SE1 may be interchanged. For example, in one or more embodiments of the present invention, the first signal lines SL1 may each receive the drive signals.

Referring to FIG. 3, the sealing member SM overlapping the non-sensing region NAA0 is illustrated. Most of the sealing member SM is disposed outward of the signal lines SL1, SL2, and SL3 on the plane. To decrease the area of the non-sensing region NAA0, the sealing member SM may overlap the pads PD.

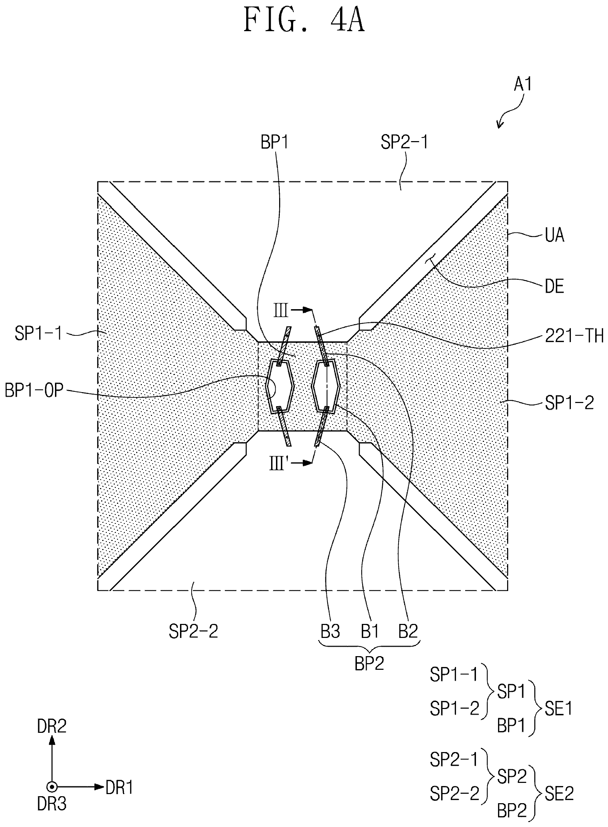

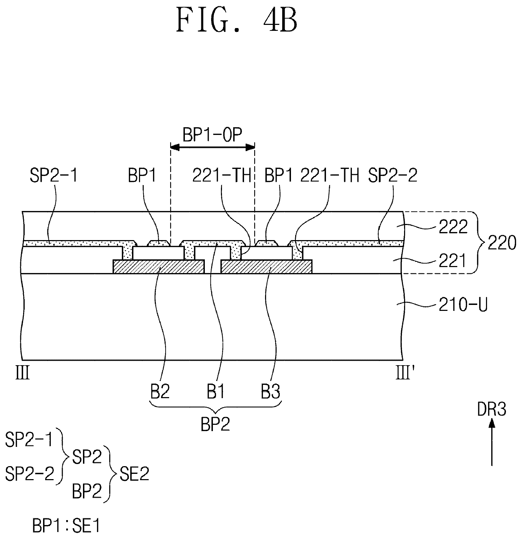

FIG. 4A is a plan view of a first region A1 of FIG. 3, according to one or more embodiments of the present invention. FIG. 4B is a cross-sectional view taken along line III-III' of FIG. 4A, according to one or more embodiments of the present invention. Hereinafter, the input sensor 220 will be described in more detail with reference to FIGs. 4A and 4B together with FIG. 3.

As illustrated in FIGs. 4A and 4B, the first region A1 corresponds to one unit region UA. The sensing region AA0 of FIG. 3 may include a plurality of unit regions UA of FIGs. 4A and 4B. An intersection region of the first sensing electrode SE1 and the second sensing electrode SE2 is disposed in each unit region UA.

One of the first sensing electrode SE1 and the second sensing electrode SE2 may have an integral shape, and the other may include a plurality of patterns spaced and/or apart from (*e.g*., spaced apart or separated from) each other. In one or more embodiments, the first sensing electrode SE1 having an integral shape is illustrated as an example. Among the first group of sensing parts SP1 and intermediate parts BP1 and the second group of sensing parts SP2 and intermediate parts SP2 described with reference to FIG. 3, a group having an integral shape will be described as sensing parts SP1, SP2 and intermediate parts BP1, BP2, and a group having no integral shape will be described as sensing patterns SP1, SP2 and bridges BP1, BP2.

The sensing pattern may include the sensing patterns SP1, SP2, or at least one of the sensing patterns SE1 or SE2. The second sensing electrode SE2 may include the plurality of sensing patterns SP2 and the bridges BP2, each of which is disposed between adjacent sensing patterns SP2 to electrically connect the adjacent sensing patterns SP2. One of the adjacent two sensing patterns SP2 may be defined as the first sensing pattern SP2-1, and the other may be defined as the second sensing pattern SP2-2. The first sensing pattern SP2-1 and the second sensing pattern SP2-2 are spaced and/or apart from (*e.g*., spaced apart or separated from) each other in the second direction DR2.

The first sensing electrode SE1 may include the plurality of sensing parts SP1 and the intermediate parts BP1, each of which is disposed between adjacent sensing parts SP1 to electrically connect the adjacent sensing parts SP1. One of the adjacent two sensing parts SP1 may be defined as the first sensing part SP1-1, and the other may be defined as the second sensing part SP1-2. The intermediate part BP1 is disposed between the first sensing part SP1-1 and the second sensing part SP1-2 in the first direction DR1. Because the first sensing part SP1-1, the second sensing part SP1-2, and the intermediate part BP1 have an integral shape in one or more embodiments, the boundaries are not distinguished. According to one or more embodiments, a portion of the first sensing electrode SE1 disposed between the first sensing pattern SP2-1 and the second sensing pattern SP2-2 in the second direction DR2 may be defined as the intermediate part BP1. The boundaries between the first and second sensing parts SP1-1 and SP1-2 and the intermediate part BP1 are illustrated by dotted lines in FIG. 4A.

The bridge pattern may include a first bridge pattern B1, a second bridge pattern B2 and a third bridge pattern B3. Two bridges BP2 are illustrated in FIG. 4A. However, the number of bridges BP2 in the unit region UA is not particularly limited. Each of the bridges BP2 may include a first bridge pattern B1, a second bridge pattern B2, and a third bridge pattern B3. Each of the first bridge pattern B1, the second bridge pattern B2, and the third bridge pattern B3 may be a conductive pattern. The first bridge pattern B1 is disposed on a layer different from the second bridge pattern B2 and the third bridge pattern B3. The first bridge pattern B1 may be disposed on the same layer as the sensing pattern SP2. The first bridge pattern B1 is disposed in an opening BP1-OP defined in the intermediate part BP1.

The configuration of the bridge BP2 is not limited thereto. In one or more embodiments of the present invention, the bridge BP2 may include only one of the second bridge pattern B2 or the third bridge pattern B3. The one bridge pattern may be disposed on a layer different from the first sensing pattern SP2-1 and the second sensing pattern SP2-2. The bridge pattern may be directly connected to the first sensing pattern SP2-1 and the second sensing pattern SP2-2.

Dummy electrodes DE may be disposed between the first sensing pattern SP2-1 and the first sensing part SP1-1, between the first sensing pattern SP2-1 and the second sensing part SP1-2, between the second sensing pattern SP2-2 and the first sensing part SP1-1, and between the second sensing pattern SP2-2 and the second sensing part SP1-2. The dummy electrodes DE may be electrically isolated floating patterns. In one or more embodiments of the present invention, the dummy electrodes DE may be omitted (*e.g.*, may not be provided).

In FIG. 4A, the boundaries between the first sensing pattern SP2-1, the second sensing pattern SP2-2, the first sensing part SP1-1, the second sensing part SP1-2, and the dummy electrodes DE are illustrated only as boundary lines. In one or more embodiments, each of the boundary lines briefly illustrates that two adjacent components among the first sensing pattern SP2-1, the second sensing pattern SP2-2, the first sensing part SP1-1, the second sensing part SP1-2, and the dummy electrodes DE are disposed to be spaced and/or apart from (*e.g*., separated from) each other.

As illustrated in FIG. 4B, the second bridge pattern B2 and the third bridge pattern B3 are disposed on the encapsulation substrate 210-U. The second bridge pattern B2 and the third bridge pattern B3 may include metal. The second bridge pattern B2 and the third bridge pattern B3 may include a single metal layer.

At least one insulating layer is disposed on the upper surface of the encapsulation substrate 210-U. A first insulating layer 221 may cover the second bridge pattern B2 and the third bridge pattern B3. The first sensing pattern SP2-1 and the second sensing pattern SP2-2 are disposed on the first insulating layer 221. The intermediate part BP1 is disposed between the first sensing pattern SP2-1 and the second sensing pattern SP2-2. The first bridge pattern B1 is disposed in the opening BP1-OP of the intermediate part BP1.

The first sensing pattern SP2-1 and the first bridge pattern B1 may make contact with the second bridge pattern B2 through contact holes 221-TH penetrating the first insulating layer 221. The first bridge pattern B1 and the second sensing pattern SP2-2 make contact with the third bridge pattern B3 through contact holes 221-TH penetrating the first insulating layer 221. The first bridge pattern B1 may be located in parallel to the second bridge pattern B2 and the third bridge pattern B3. The first bridge pattern B1 may be located within the layer of the first sensing pattern SP2-1 and the second sensing pattern SP2-2.

The first sensing pattern SP2-1, the second sensing pattern SP2-2, the first sensing part SP1-1, the second sensing part SP1-2, and the first bridge pattern B1 of FIGs. 4A and 4B may be formed through substantially the same photolithography process and may include substantially the same material. The first sensing pattern SP2-1, the second sensing pattern SP2-2, the first sensing part SP1-1, the second sensing part SP1-2, and the first bridge pattern B1 may include a transparent conductive oxide (TCO). The first sensing pattern SP2-1, the second sensing pattern SP2-2, the first sensing part SP1-1, the second sensing part SP1-2, and the first bridge pattern B1 may include indium tin oxide (ITO), indium zinc oxide (IZO), zinc oxide (ZnO), and/or indium tin zinc oxide (ITZO). The first sensing pattern SP2-1, the second sensing pattern SP2-2, the first sensing part SP1-1, the second sensing part SP1-2, and the first bridge pattern B1 may have a thickness of about 700*10⁷ to about 1000*10⁷ (700Å to about 1000Å). Because the first sensing pattern SP2-1, the second sensing pattern SP2-2, the first sensing part SP1-1, and the second sensing part SP1-2 include transparent conductive oxide, a decrease in luminance may be suppressed or reduced even though each of the sensing electrodes SE1 and SE2 of FIG. 3 overlaps a corresponding one of the light emitting elements OLED illustrated in FIG. 1D. In one or more embodiments of the present invention, the first sensing pattern SP2-1, the second sensing pattern SP2-2, the first sensing part SP1-1, the second sensing part SP1-2, and the first bridge pattern B1 may include poly(3,4-ethylenedioxythiophene) (PEDOT), a metal nano wire, or graphene.

As illustrated in FIG. 4B, a second insulating layer 222 is disposed on the first insulating layer 221. The second insulating layer 222 may cover the first sensing pattern SP2-1, the second sensing pattern SP2-2, the intermediate part BP1, and the first bridge pattern B1. The first insulating layer 221 and the second insulating layer 222 may include an inorganic material or an organic material. In one or more embodiments, the first insulating layer 221 and the second insulating layer 222 may each include silicon oxide, silicon nitride, and/or silicon oxy-nitride. In one or more embodiments, each of the first insulating layer 221 and the second insulating layer 222 may be a silicon oxide layer having a thickness of 2500*10⁷ to 3500*10⁷ (2500Å to 3500Å). In one or more embodiments, an inorganic layer may be additionally disposed between the upper surface of the encapsulation substrate 210-U and the second and third bridge patterns B2 and B3.

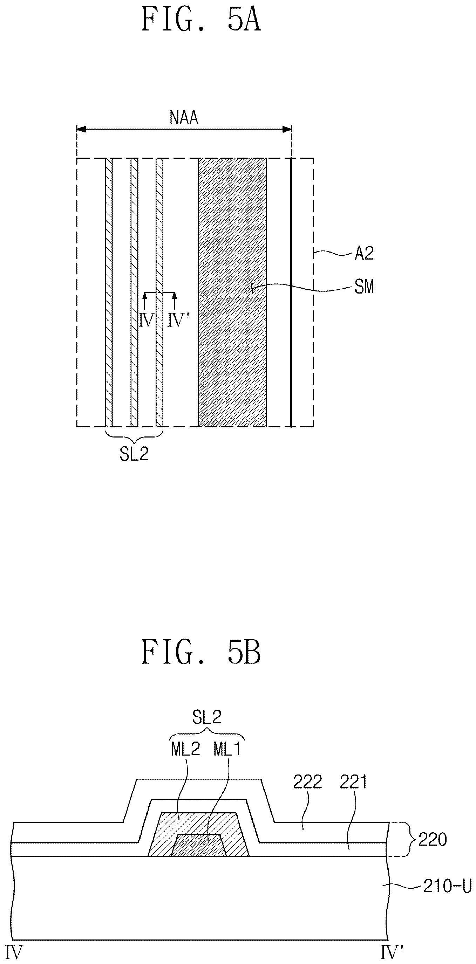

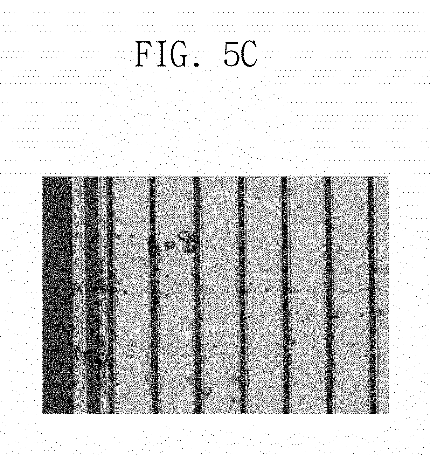

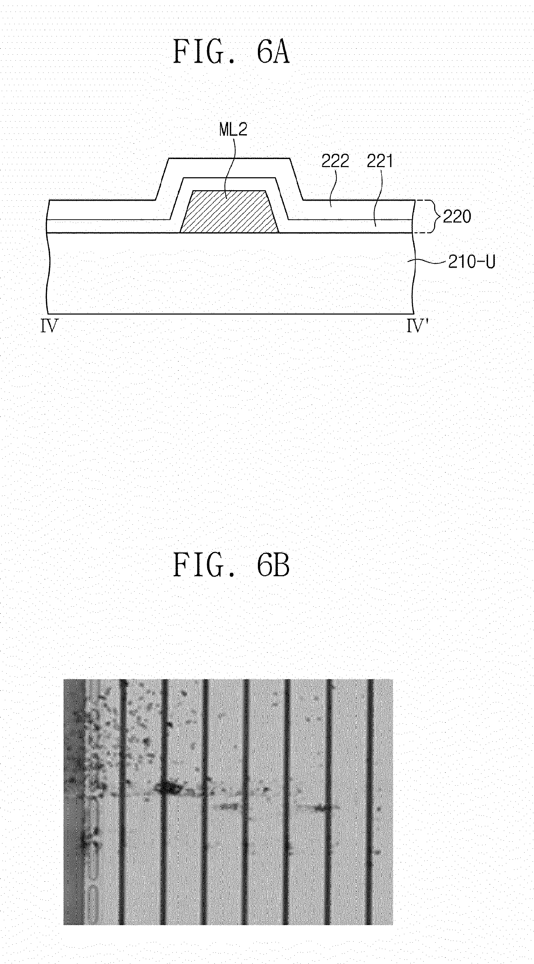

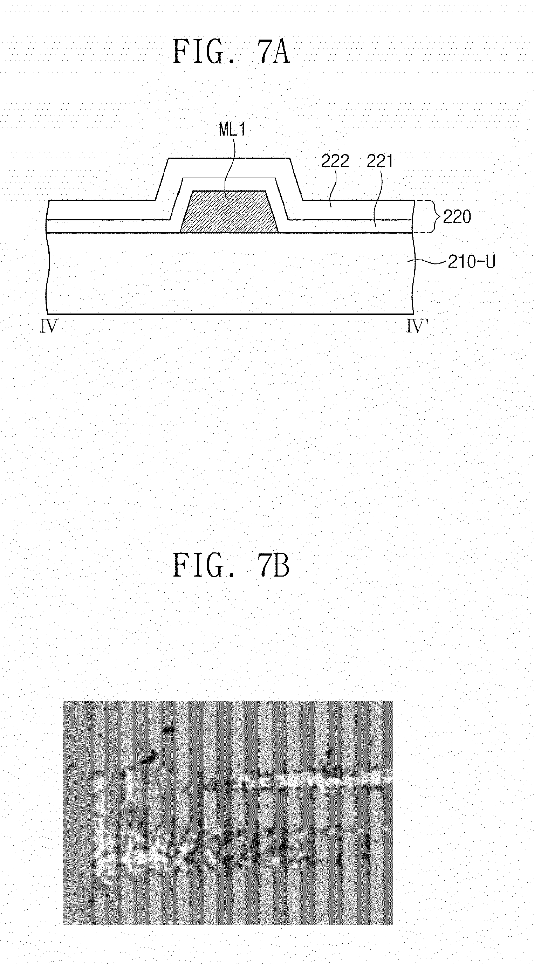

FIG. 5A is a plan view of a second region A2 of FIG. 3, according to one or more embodiments of the present invention. FIG. 5B is a cross-sectional view taken along line IV-IV' of FIG. 5A, according to one or more embodiments of the present invention. FIG. 5C is an image of a signal line according to one or more embodiments of the present invention. FIG. 6A is a cross-sectional view of a signal line according to a comparative example. FIG. 6B is an image of the signal line according to the comparative example. FIG. 7A is a cross-sectional view of a signal line according to a comparative example. FIG. 7B is an image of the signal line according to the comparative example.

In FIGs. 5A and 5B, the second signal lines SL2 are illustrated as a representative of the plurality of signal lines SL1, SL2, and SL3 illustrated in FIG. 3. Description of the second signal line SL2 may be substantially identically applied to the first and third signal lines SL1 and SL3.

Referring to FIGs. 5A and 5B, the second signal lines SL2 may be disposed on the encapsulation substrate 210-U and may be disposed under the first insulating layer 221. The second signal line SL2 may include a first metal layer ML1 and a second metal layer ML2 disposed on the first metal layer ML1. The first metal layer ML1 has higher electrical conductivity (*e.g.*, is a conductor) than the second metal layer ML2, and the second metal layer ML2 has a higher hardness than the first metal layer ML1.

The first metal layer ML1 may include a metal such as aluminum (Al), copper (Cu), gold (Au), and/or silver (Ag). The first metal layer ML1 may include an alloy of the metals, or may include an alloy of the metals and a metal other than the aforementioned metals. The first metal layer ML1 may have a thickness of about 3000*10⁷ to about 4000*10⁷ (3000Å to about 4000Å).

For example, the first metal layer ML1 may include aluminum (Al) or aluminum alloy (Al alloy). For example, the first metal layer ML1 may include an aluminum-neodymium alloy (AlNd). Aluminum may lower the resistance of the second signal line SL2, and neodymium (Nd) may suppress or reduce the advent of the hillock phenomenon of aluminum. Even though a curing process of the sealing composition SM-P described with reference to FIG. 2C is performed in a high-temperature environment, a hillock of the first metal layer ML1 may be suppressed or reduced by neodymium (Nd). As the area of the input sensor 220 (as shown, *e.g*., in FIG. 1B) mounted in the 16-inch (16*2,54 cm) or larger display device 200 (as shown, *e.g.*, in FIG. 1B) increases, a low-resistance signal line may be required to prevent or reduce signal delay, and the resistance of the second signal line SL2 may be lowered through the first metal layer ML1.

The second metal layer ML2 may include a metal such as molybdenum (Mo), nickel (Ni), chromium (Cr), and/or titanium (Ti). The second metal layer ML2 may include an alloy of the metals, or may include an alloy of the metals and a metal other than the aforementioned metals. The second metal layer ML2 may have a thickness of about 3500*10⁷ to about 4500*10⁷ (3500Å to about 4500Å). The second metal layer ML2 may be thicker than the first metal layer ML1.

For example, the second metal layer ML2 may include molybdenum (Mo) or molybdenum alloy (Mo alloy). For example, the second metal layer ML2 may include a molybdenum-niobium alloy (MoNb). Molybdenum (Mo) may increase the hardness of the second signal line SL2, and niobium (Nb) may improve the corrosion resistance of the second metal layer ML2. The second metal layer ML2 may suppress or reduce scratch damage and corrosion of the second signal line SL2 in a subsequent process.

Referring to FIG. 5B, the second metal layer ML2 may be disposed on the first metal layer ML1 and may make contact with the first metal layer ML1. The second metal layer ML2 may make contact with surfaces of the first metal layer ML1 other than a contact surface of the first metal layer ML1 with the encapsulating substrate 210-U. As illustrated in FIG. 5B, the second metal layer ML2 may make contact with inclined side surfaces and an upper surface of the first metal layer ML1. The second metal layer ML2 may have a clad structure with respect to the first metal layer ML1 (e.g., the second metal layer ML2 may coat the first metal layer ML1 similar to a cladding).

FIG. 5C is a plan view of the signal line described with reference to FIG. 5B, according to one or more embodiments of the present invention. The signal line having improved heat resistance and corrosion resistance has relatively reduced defects. For example, as described with reference to FIG. 5B, the electrical conductivity of the signal line is improved.

FIG. 6A illustrates a signal line including only the second metal layer ML2 of FIG. 5B. Referring to FIG. 6B, a defect in external appearance is reduced, but the electrical conductivity of the signal line is relatively low. FIG. 7A illustrates a signal line including only the first metal layer ML1 of FIG. 5B. It can be seen that the electrical conductivity of the signal line is relatively high, but the signal line is damaged due to scratch defects in a subsequent process.

The second and third bridge patterns B2 and B3 are compared with the second signal line SL2 with reference to FIGs. 4B and 5B. The second signal line SL2 has a multi-layer structure, whereas the second and third bridge patterns B2 and B3 have a single-layer structure. If (*e.g*., when) the second and third bridge patterns B2 and B3 have a multi-layer clad structure, the line widths of the second and third bridge patterns B2 and B3 may be increased, and therefore visibility may be lowered. For example, the second and third bridge patterns B2 and B3 may be more clearly or easily recognized.

The second and third bridge patterns B2 and B3 may be formed through substantially the same photolithography process as the second metal layer ML2 of the second signal line SL2 and may include substantially the same material as the second metal layer ML2 of the second signal line SL2. Because the second and third bridge patterns B2 and B3 are short, the resistance of the second sensing electrode SE2 is not greatly increased even though a low-resistance layer is not included. For example, the transparent conductive oxides of the first sensing pattern SP2-1, the second sensing pattern SP2-2, and the first bridge pattern B1 define an ohmic contact for the single metal layer of the second bridge pattern B2 and the third bridge pattern B3. The transparent conductive oxide and the metal layer may achieve relatively low contact resistance.

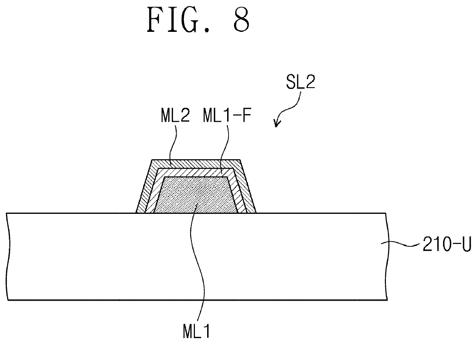

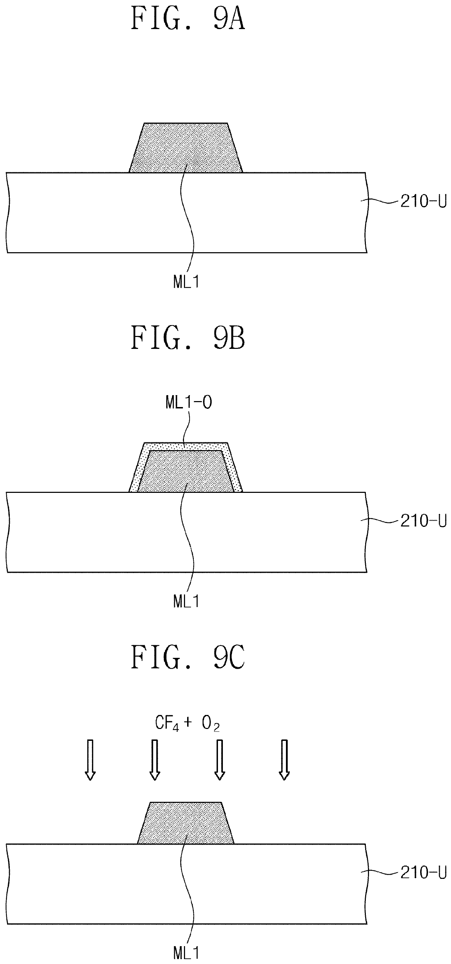

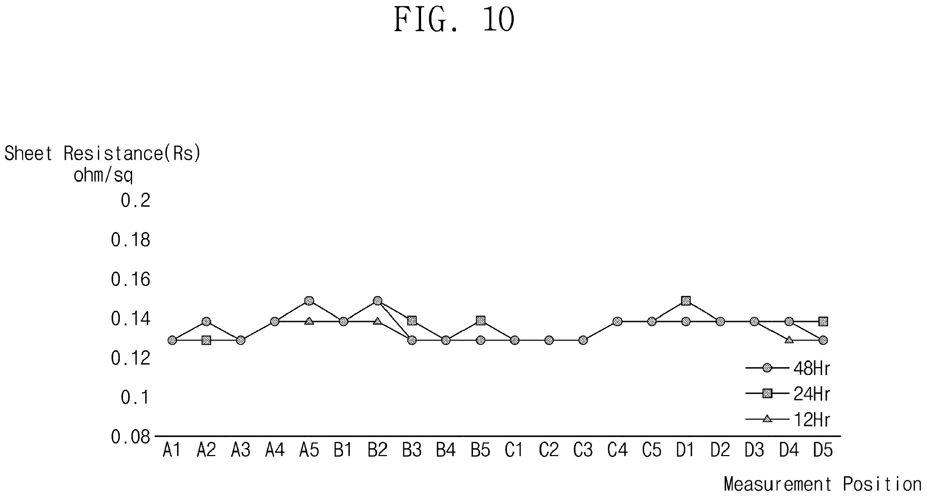

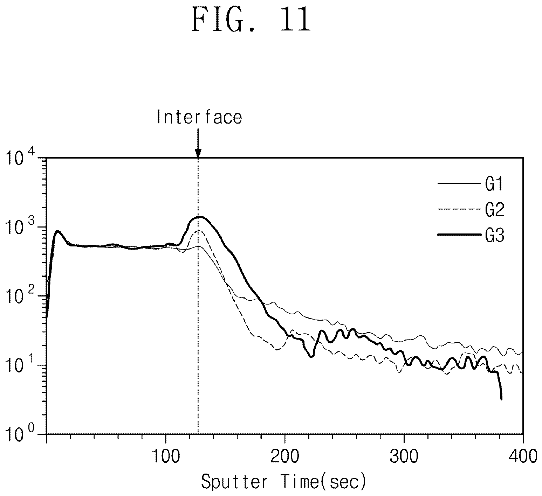

FIG. 8 is a cross-sectional view of the signal line SL2 according to one or more embodiments of the present invention. FIGs. 9A to 9E are cross-sectional views illustrating a manufacturing process of the signal line SL2 according to one or more embodiments of the present invention. FIG. 10 is a graph depicting a change in the sheet resistance of the first metal layer ML1 in a standby state after the first metal layer ML1 of FIG. 9A is formed. FIG. 11 illustrates graphs obtained by analyzing ion concentrations of niobium oxides of signal lines SL2.

Referring to FIG. 8, the signal line SL2 may further include an anti-oxidation layer ML1-F disposed between the first metal layer ML1 and the second metal layer ML2. The anti-oxidation layer ML1-F may have a thickness of 20*10⁷ to 50*10⁷ (20Å to 50Å). The anti-oxidation layer ML1-F may prevent or reduce an oxide film from being formed on a surface of the first metal layer ML1. The anti-oxidation layer ML1-F may have a clad structure with respect to the first metal layer ML1 (*e.g.*, the anti-oxidation layer ML1-F may coat the first metal layer ML1 similar to a cladding).

The anti-oxidation layer ML1-F may include a metal fluoride material of the first metal layer ML1. If (*e.g*., when) the first metal layer ML1 includes aluminum or aluminum alloy, the anti-oxidation layer ML1-F may include aluminum fluoride (AlF₃). Aluminum fluoride (AlF₃) may suppress or reduce an increase in the resistance of the first metal layer (ML1) when compared to aluminum oxide (Al₂O₃).

Referring to FIG. 9A, the line-shaped first metal layer ML1 (hereinafter, referred to as the metal line) is formed through a first photolithography process. A surface of the metal line ML1 may be oxidized for a wait time for a next process after the metal line ML1 is formed. As illustrated in FIG. 9B, an oxide film ML1-O of the metal line is formed on the surface of the metal line ML1.

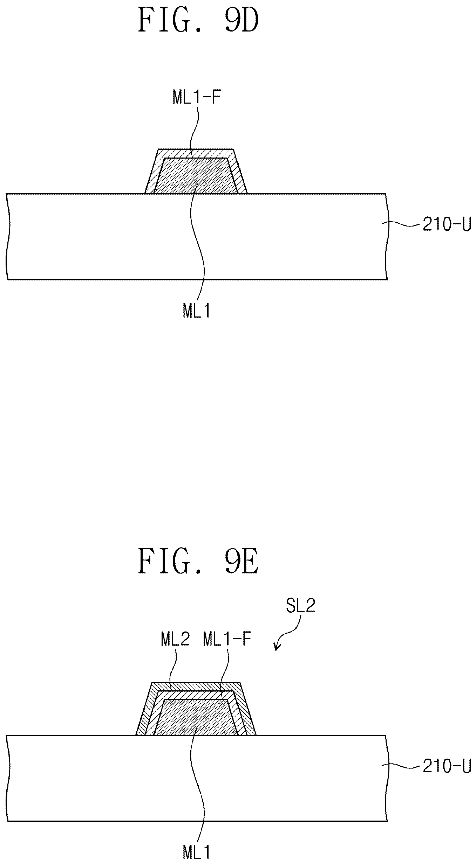

As illustrated in FIG. 9C, the oxide film ML1-O of the metal line may be removed through a dry etching process. The dry etching process may be performed utilizing CF₄ and O₂ gas. Fluorine ions generated in the dry etching process may react with the metal of the first metal layer ML1, for example, aluminum, to form the anti-oxidation layer ML1-F illustrated in FIG. 9D. Thereafter, the second metal layer ML2 is formed through a second photolithography process, as shown, *e.g*., in FIG. 9E. Accordingly, the second signal line SL2 having a three-layer structure may be formed.

FIG. 10 illustrates a change in the sheet resistance Rs of the first metal layer ML1 over time. Changes in the sheet resistance Rs of the first metal layer ML1 were measured at a plurality of points A1 to A5, B1 to B5, C1 to C5, and D1 to D5 of a working substrate. A plurality of unit cells was concurrently (*e.g*., simultaneously) formed through the working substrate. The input sensor 220 of FIG. 3 was formed for each unit cell. The changes in the sheet resistance Rs of the first metal layer ML1 were measured at the 20 points A1 to A5, B1 to B5, C1 to C5, and D1 to D5.

The sheet resistance Rs was measured after the dry etching process of FIG. 9C. It can be seen that the sheet resistance of the first metal layer ML1 is maintained without an increase at most of the 20 points A1 to A5, B1 to B5, C1 to C5, D1 to D5 even after 12 hours, 24 hours, and 48 hours. For example, the sheet resistance Rs of the first metal layer ML1 was maintained below the reference value of 0.17 ohm/sq (or, 0.17 Ω/sq). This is because the anti-oxidation layer ML1-F was formed on the surface of the first metal layer ML1 to prevent or reduce oxidation of the first metal layer ML1.

The first to third graph lines G1 to G3 of FIG. 11 show results obtained by analyzing the ion concentrations of the niobium oxides of the signal lines through Time-of-Flight Secondary Ion Mass Spectrometry (TOF SiMS). The measurement was made after the second metal layer ML2 was formed as illustrated in FIG. 9E. The measurement was made based on the signal line in which the first metal layer ML1 including AlNd and the second metal layer ML2 including MoNb were formed.

The first graph G1 shows the ion concentration of niobium oxide of a signal line formed by a first process. The second metal layer ML2 including MoNb was formed immediately after the first metal layer ML1 including AlNd was formed in the vacuum state through the first process. The second graph G2 shows the ion concentration of niobium oxide of a signal line formed by a second process. The second process refers to the process described with reference to FIGs. 9A to 9E, and the signal line includes the first metal layer ML1 made of AlNd, the anti-oxidation layer ML1-F made of AlF₃, and the second metal layer ML2 made of MoNb. The third graph G3 shows the ion concentration of niobium oxide of a signal line formed by a third process. Among the processes described with reference to FIGs. 9A to 9E, the dry etching process of FIG. 9C was omitted (*e.g*., was not provided) in the third process. The signal line formed by the third process includes the first metal layer ML1 made of AlNd, the oxide film ML1-O (for example, the Al₂O₃ film) of the first metal layer, and the second metal layer ML2 made of AlNd.

For the first to third graphs G1 to G3, the ion concentration of niobium oxide measured at the interface between the second metal layer ML2 and the layer disposed below the second metal layer ML2 is displayed. The ion concentration of the niobium oxide at the interface in the second graph G2 is lower than the ion concentration of the niobium oxide at the interface in the third graph G3. This means that the oxide film ML1-O of the first metal layer was removed through the dry etching process of FIG. 9C and the anti-oxidation layer ML1-F was formed.

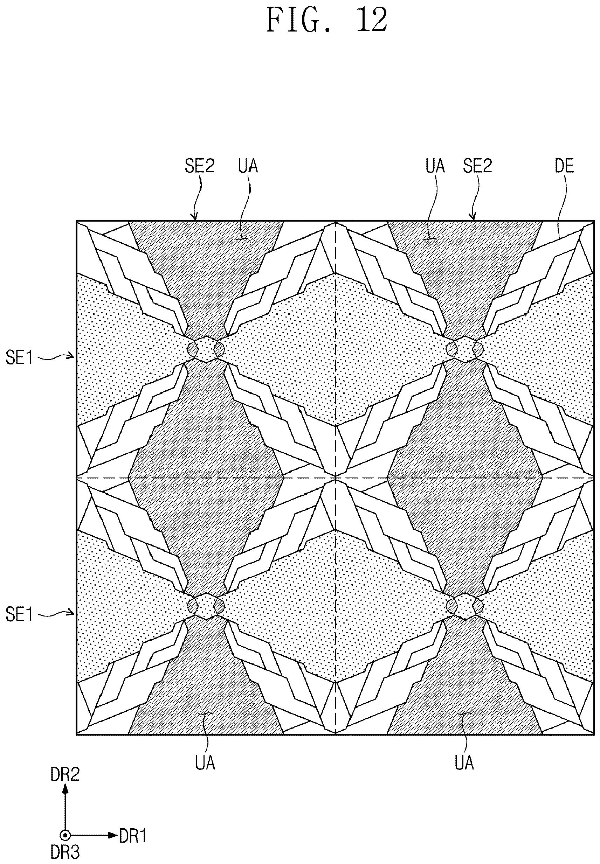

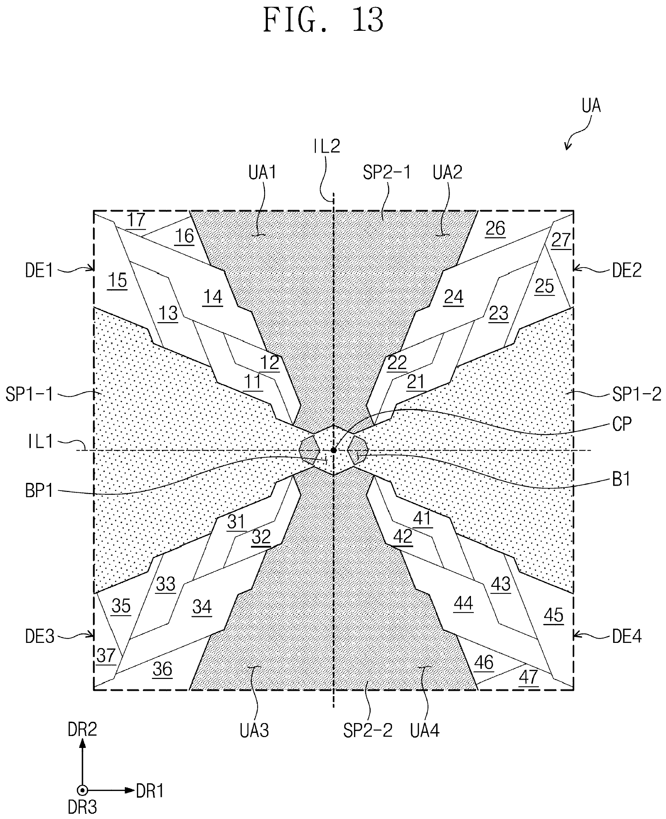

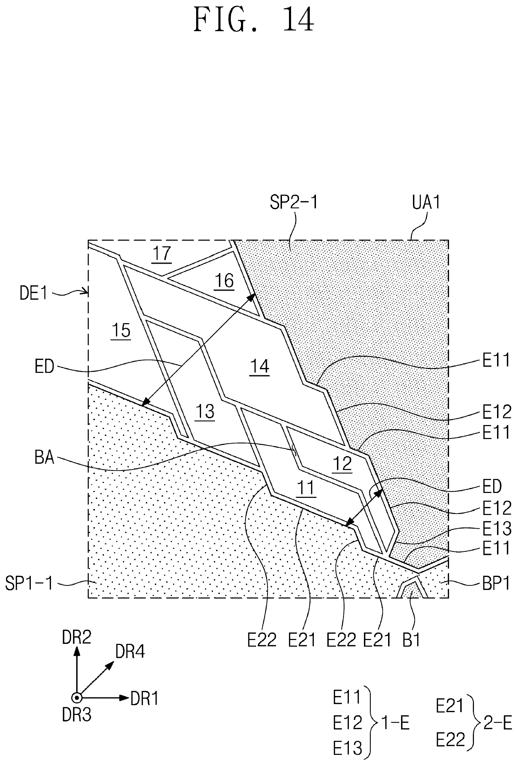

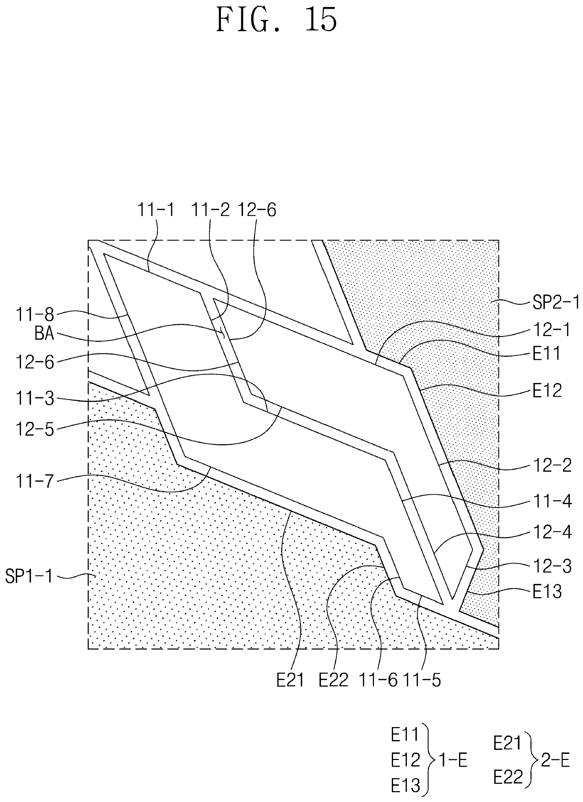

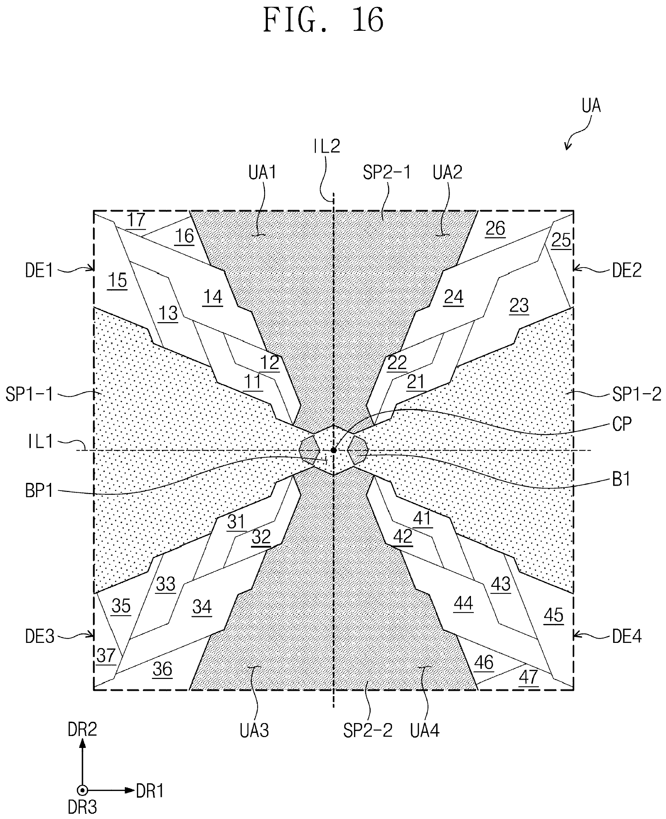

FIG. 12 is a plan view illustrating a portion of the sensing region AA0 according to one or more embodiments of the present invention. FIG. 13 is a plan view illustrating a unit region UA according to one or more embodiments of the present invention. FIG. 14 is an enlarged plan view of a first region UA1 of FIG. 13, according to one or more embodiments of the present invention. FIG. 15 is an enlarged plan view of a partial region of FIG. 14, according to one or more embodiments of the present invention. FIG. 16 is a plan view illustrating a unit region UA according to one or more embodiments of the present invention. For components substantially identical to the components described with reference to FIGs. 3 to 4B, the descriptions of FIGs. 3 to 4B are referred to for additional details.

FIG. 12 illustrates intersection regions of two first sensing electrodes SE1 and two second sensing electrodes SE2. As described with reference to FIG. 4A, the first sensing electrodes SE1 may have an integral shape, and the second sensing electrodes SE2 may include a plurality of patterns. The second bridge pattern B2 and the third bridge pattern B3 of FIG. 4A are described in more detail above. A plurality of dummy electrodes DE disposed between the first sensing electrodes SE1 and the second sensing electrodes SE2 are illustrated in FIG. 12. The boundary line between adjacent electrodes among the first sensing electrodes SE1, the second sensing electrodes SE2, and the dummy electrodes DE means that edges of the adjacent electrodes are spaced and/or apart from (*e.g*., separated from or spaced apart from) each other.

FIG. 13 is a blowup of one unit region UA, according to one or more embodiments. FIG. 13 may correspond to FIG. 4A. A first dummy electrode DE1 may be disposed between a first sensing pattern SP2-1 and a first sensing part SP1-1. A second dummy electrode DE2 may be disposed between the first sensing pattern SP2-1 and a second sensing part SP1-2. A third dummy electrode DE3 may be disposed between a second sensing pattern SP2-2 and the first sensing part SP1-1. A fourth dummy electrode DE4 may be disposed between the second sensing pattern SP2-2 and the second sensing part SP1-2.

Each of the first to fourth dummy electrodes DE1 to DE4 may include a plurality of portions spaced and/or apart from (*e.g*., separated from or spaced apart from) each other. Seven first portions 11 to 17 of the first dummy electrode DE1, seven second portions 21 to 27 of the second dummy electrode DE2, seven third portions 31 to 37 of the third dummy electrode DE3, and seven fourth portions 41 to 47 of the fourth dummy electrode DE4 are illustrated in FIG. 13. The first portions 11 to 17 may have different areas and shapes, and the second portions 21 to 27 may have different areas and shapes. The third portions 31 to 37 may have different areas and shapes, and the fourth portions 41 to 47 may have different areas and shapes.

The unit region UA of FIG. 13 may be divided into first, second, third, and fourth regions UA1, UA2, UA3, and UA4 by a first virtual line IL1 and a second virtual line IL2. The first, second, third, and fourth dummy electrodes DE1, DE2, DE3, and DE4 are disposed in the first, second, third, and fourth regions UA1, UA2, UA3, and UA4, respectively.

The first virtual line IL1 is parallel (e.g., substantially parallel) to the first direction DR1, and the second virtual line IL2 is parallel (e.g., substantially parallel) to the second direction DR2. The first virtual line IL1 and the second virtual line IL2 may cross each other at the center CP of the unit region UA. The center CP of the unit region UA may be the center of the region defined by the first sensing part SP1-1, the second sensing part SP1-2, the first sensing pattern SP2-1, and the second sensing pattern SP2-2.

The first portions 11 to 17 and the third portions 31 to 37 may have an asymmetric arrangement with respect to the first virtual line IL1, and the second portions 21 to 27 and the fourth portions 41 to 47 may have an asymmetric arrangement with respect to the first virtual line IL1. The first portions 11 to 17 and the second portions 21 to 27 may have an asymmetric arrangement with respect to the second virtual line IL2, and the third portions 31 to 37 and the fourth portions 41 to 47 may have an asymmetric arrangement with respect to the second virtual line IL2.

Some of the first portions 11 to 17 (*e.g*., the first portions 11 to 14) and some of the second portions 21 to 27 (*e.g*., the second portions 21 to 24) may be symmetrical to each other with respect to the second virtual line IL2. For example, the portion 11 and the portion 21 may be symmetrical to each other based on the second direction DR2, and the portion 12 and the portion 22 may be symmetrical to each other based on the second direction DR2. If (*e.g.*, when) the first portions 11 and 17 are rotated about the center CP of the unit region UA by 180 degrees in the clockwise direction, the first portions 11 to 17 may have substantially the same shape as the fourth portions 41 to 47. Furthermore, if (*e*.*g*., when) the second portions 21 and 27 are rotated about the center CP of the unit region UA by 180 degrees in the clockwise direction, the second portions 21 to 27 may have substantially the same shape as the third portions 31 to 37.

The portion 15 and the portion 17 among the first portions 11 to 17, the portion 26 and the portion 27 among the second portions 21 to 27, the portion 36 and the portion 37 among the third portions 31 to 37, and the portion 45 and the portion 47 among the fourth portions 41 to 47 further overlap unit regions UA adjacent thereto, respectively. For example, the above-described portions overlap two unit regions. This may be identified through FIG. 12.

FIG. 14 illustrates a blowup of the first region UA1 of the unit region UA of FIG. 13. An arrangement relationship between the first sensing pattern SP2-1, the first sensing part SP1-1, and the first dummy electrode DE1 is illustrated in more detail, for example, in FIG. 14. The first sensing pattern SP2-1 includes an edge 2-E (hereinafter, in particular referred to as the pattern edge 2-E) that faces the first sensing part SP1-1, and the first sensing part SP1-1 includes an edge 1-E (hereinafter, in particular referred to as the part edge 1-E) that faces the first sensing pattern SP2-1.

The gap ED between the pattern edge 2-E and the part edge 1-E increases the farther it is away from an intermediate part BP1. The gap ED is measured in a fourth direction DR4 that forms an angle of 45 degrees with the first direction DR1 and the second direction DR2. In one or more embodiments, a gap corresponding to the gap ED of FIG. 14 may be substantially constant. As the gap ED increases farther away from the intermediate part BP1 as illustrated in FIG. 14, the areas of the first sensing pattern SP2-1 and the first sensing part SP1-1 may be decreased when compared to the areas of the first sensing pattern SP2-1 and the first sensing part SP1-1 of FIG. 4A. If (*e.g*., when) the areas of the first sensing pattern SP2-1 and the first sensing part SP1-1 are decreased, interference due to noise generated from the display substrate 210-B illustrated in FIGs. 1C and 1D may be reduced, and parasitic capacitance between the conductive pattern of the display substrate 210-B and the first sensing pattern SP2-1 or the first sensing part SP1-1 may be reduced.

The pattern edge 2-E may include a plurality of components E21 and E22 extending in oblique directions. The oblique directions may be directions crossing the first direction DR1 and the second direction DR2, and the pattern edge 2-E may extend in different oblique directions depending on the components E21 and E22. The pattern edge 2-E may include the first components E21 extending in a first oblique direction and the second components E22 extending in a second oblique direction. The first components E21 and the second components E22 may be alternately disposed.

The part edge 1-E may include a plurality of components E11, E12, and E13 extending in oblique directions. The oblique directions may be directions crossing the first direction DR1 and the second direction DR2, and the part edge 1-E may extend in different oblique directions depending on the components E11, E12, and E13. The part edge 1-E may include the third components E11 extending in a third oblique direction, the fourth components E12 extending in a fourth oblique direction, and the fifth components E13 extending in a fifth oblique direction. In one or more embodiments, the third oblique direction is described as substantially the same direction as the first oblique direction in which the above-described first components E21 extend. However, the present invention is not limited thereto. Furthermore, in one or more embodiments, the fourth oblique direction is described as substantially the same direction as the second oblique direction in which the above-described second components E22 extend. However, the present invention is not limited thereto.

The third component E11 is disposed closest to the intermediate part BP1. The fifth component E13 extends from the third component E11, and the fourth component E12 extends from the fifth component E13. Thereafter, the third components E11 and the fourth components E12 may be alternately disposed.

Among the first portions 11 to 17, the portion 11 and the portion 12 are disposed between the pattern edge 2-E and the part edge 1-E, and the portion 13 and the portion 14 are disposed between the pattern edge 2-E and the part edge 1-E. The portion 11 and the portion 13 are disposed closer to the pattern edge 2-E than the portion 12 and the portion 14.

The portion 13 and the portion 14 are disposed farther away from the intermediate part BP1 than the portion 11 and the portion 12. The portion 15, the portion 16, and the portion 17 are disposed farther away from the intermediate part BP1 than the portion 13 and the portion 14. The portion 15 is disposed closer to the pattern edge 2-E than the portion 16 and the portion 17.

The first portions 11 to 17 may be spaced and/or apart from (*e.g*., separated from or spaced apart from) each other and may have different polygonal shapes. Edges of each of the first portions 11 to 17 may be parallel (*e.g*., substantially parallel) to one of the first component E21, the second component E22, the third component E11, the fourth component E12, and the fifth component E13.

Referring to FIGs. 14 and 15, the portion 11 includes first to eighth edges 11-1 to 11-8. The fifth to eighth edges 11-5 and 11-8 are adjacent to the pattern edge 2-E. The fifth and seventh edges 11-5 and 11-7 are parallel (*e.g*., substantially parallel) to the first component E21. The sixth and eighth edges 11-6 and 11-8 are parallel (*e.g*., substantially parallel) to the second component E22. The first and third edges 11-1 and 11-3 may be further parallel (*e.g*., substantially parallel) to the first component E21. The second and fourth edges 11-2 and 11-4 may be further parallel (*e.g*., substantially parallel) to the second component E22.

Referring to FIGs. 14 and 15, the portion 12 includes first to sixth edges 12-1 to 12-6. The first to third edges 12-1 to 12-3 are adjacent to the part edge 1-E. The first edge 12-1 is parallel (*e.g*., substantially parallel) to the third component E11. The second edge 12-2 is parallel (*e.g*., substantially parallel) to the fourth component E12. The third edge 12-3 is parallel (*e.g*., substantially parallel) to the fifth component E13. The fifth edge 12-5 may be further parallel (*e.g*., substantially parallel) to the third component E11. The fourth and sixth edges 12-4 and 12-6 may be further parallel (*e.g.*, substantially parallel) to the fourth component E12.

As the pattern edge 2-E, the part edge 1-E, and the edges of the plurality of portions of the dummy electrodes DE1 to DE4 extend in the first to fifth oblique directions, a moiré phenomenon may be reduced. As illustrated in FIGs. 12 to 15, the first sensing electrodes SE1, the second sensing electrodes SE2, and the dummy electrodes DE1 to DE4 may be divided (or, formed) according to a rule different from that of the electrodes or signal lines of the display panel 210 (as shown, *e.g*., in FIG. 1C). Accordingly, a moiré phenomenon generated by interference between the patterns of the input sensor 220 and the patterns of the display panel 210 may be reduced.

Referring to FIG. 15, the boundary region BA between the portion 11 and the portion 12 is defined by the second to fourth edges 11-2 to 11-4 of the portion 1-1 11 and the fourth to sixth edges 12-4 to 12-6 of the portion 12. The boundary region BA may include a region extending in the first oblique direction and a region extending in the second oblique direction. For example, the region between the second edge 11-2 of the portion 11 and the sixth edge 12-6 of the portion 12 may extend in the second oblique direction. For example, the region between the third edge 11-3 of the portion 11 and the fifth edge 12-5 of the portion 12 may extend in the first oblique direction. This is because in one or more embodiments, the first oblique direction and the third oblique direction described above are defined as substantially the same direction and the second oblique direction and the fourth oblique direction are defined as substantially the same direction.

As each of the first to fourth dummy electrodes DE1 to DE4 includes the plurality of portions spaced and/or apart from (*e.g.*, separated from or spaced apart form) each other as illustrated in FIGs. 12 to 15, the amount of change in reference capacitance may be reduced even though a defect occurs in a process. The reference capacitance refers to mutual capacitance formed between the first sensing electrode SE1 and the second sensing electrode SE2 if (*e.g.*, when) a defect does not occur in a process. If (*e.g*., when) one of the first to fourth dummy electrodes DE1 to DE4 having an integral shape is short-circuited (connected) with one of the first sensing electrode SE1 and the second sensing electrode SE2 due to a defect in a process (hereinafter, in particular referred to as the short-circuit defect), the mutual capacitance formed between the first sensing electrode SE1 and the second sensing electrode SE2 is increased when compared to the reference capacitance. The plurality of portions of each of the first to the fourth dummy electrodes DE1 to DE4 may reduce an increase in mutual capacitance when the short-circuit defect occurs.

Tables 1 and 2 below show the amount of increase in mutual capacitance generated when a short-circuit defect occurs.

**Table 1**

| Number of portions of the dummy electrode | One (No cutting line) | Four (2 cutting lines) | Sixth (3 cutting lines) |
|---|---|---|---|
| Mutual capacitance (Cm) | 0.936pF | 0.915pF | 0.896pF |
| Increment | 8.1% | 5.7% | 3.5% |

**Table 2**

| Number of portions of dummy electrode | One (No cutting line) | Four (2 cutting lines) |
|---|---|---|
| Mutual capacitance (Cm) | 0.932pF | 0.911pF |
| Increment | 7.6% | 5.2% |

Table 1 shows the amount of increase in mutual capacitance if (*e.g*., when) a short-circuit defect occurs between one of the first or second sensing patterns SP2-1 or SP2-2 and the dummy electrode of FIG. 13. Table 2 shows the amount of increase in mutual capacitance if (*e.g*., when) a short-circuit defect occurs between one of the first or second sensing parts SP1-1 or SP1-2 and the dummy electrode of FIG. 13.

Referring to Tables 1 and 2, the amount of increase in mutual capacitance is the largest if (*e.g*., when) the entire dummy electrode is short-circuited to one of the first sensing pattern SP2-1 or the second sensing pattern SP2-2 (in the case of no cutting line). As the number of portions obtained by dividing the dummy electrode is increased, the area of one portion is decreased, and thus the amount of increase in mutual capacitance is reduced.

FIG. 16 illustrates a unit region according to one or more embodiments of the present invention. Unlike in FIG. 13, the number of second portions 21 to 26 and the number of fourth portions 41 to 47 differ from each other. Even though the second portions 21 to 26 are rotated about the center CP of the unit region UA by 180 degrees in the clockwise direction, the second portions 21 to 26 do not have the same shape as the third portions 31 to 37. According to FIG. 16, the portion 23 and the portion 25 of FIG. 13 form one portion and correspond to the portion 23 of FIG. 16. Furthermore, the portion 27 of FIG. 13 corresponds to the portion 25 of FIG. 16.

As described above, the signal line may include the low-resistance first metal layer, and thus signal delay may be reduced. The second metal layer having a relatively high hardness may protect and/or substantially protect the first metal layer and may suppress or reduce damage to the signal line during a process.

The signal line may further include the anti-oxidation layer, and thus oxidation of the first metal layer may be prevented or reduced. Accordingly, signal delay of the signal line may be suppressed or reduced.

The dummy electrodes, each of which includes the plurality of portions, may be disposed between the sensing patterns and the sensing parts. Accordingly, even though a short circuit occurs between the dummy electrodes and the sensing patterns or between the dummy electrodes and the sensing parts due to a defect in a process, the amount of change in the reference capacitance may be reduced.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present invention refers to "one or more embodiments of the present invention."

The light emitting device, electronic apparatus or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present invention.

Although the embodiments of the present invention have been described, it is understood that the present invention should not be limited to these embodiments, but one or more suitable changes and modifications can be made by one ordinary skilled in the art within the scope of the present invention as defined by the following claims.

## Claims

1. A display device (200) comprising:
a display panel (210); and
an input sensor (220) on the display panel (210),
wherein the input sensor (220) comprises:
a first insulating layer (221);
a sensing electrode; and
a signal line electrically connected to the sensing electrode and under the first insulating layer (221),
wherein the signal line comprises:
a first metal layer (ML1) comprising an aluminum-neodymium alloy; and
a second metal layer (ML2) on the first metal layer (ML1), the second metal layer (ML2) comprising a molybdenum-niobium alloy, and
wherein the sensing electrode comprises:
a sensing pattern on the first insulating layer (221), the sensing pattern comprising indium tin oxide ; and
a bridge pattern under the first insulating layer (221) and electrically connected to the sensing pattern, the bridge pattern comprising the molybdenum-niobium alloy.

2. The display device (200) of claim 1, wherein the input sensor (220) further comprises a second insulating layer (222) covering the sensing pattern and on the first insulating layer (221), and
wherein the second insulating layer (222) comprises silicon oxide, silicon nitride, or silicon oxynitride.

3. The display device (200) of claim 1 or 2, wherein the signal line further comprises an anti-oxidation layer (ML1-F) between the first metal layer (ML1) and the second metal layer (ML2), the anti-oxidation layer (ML1-F) comprising aluminum fluoride.

4. The display device (200) of at least one of claims 1 to 3, wherein the bridge pattern and the first metal layer (ML1) are on the same insulating layer.

5. The display device (200) of at least one of claims 1 to 4, wherein the bridge pattern has a single-layer structure, and the first metal layer (ML1) has a two-layer structure.

6. The display device (200) of at least one of claim 1 to 5, wherein the sensing pattern and the bridge pattern define an ohmic contact through a contact hole (221-TH) defined in the first insulating layer (221).

7. The display device (200) of at least one of claims 1 to 6, wherein the second metal layer (ML2) covers a side surface and an upper surface of the first metal layer (ML1).

8. The display device (200) of at least one of claims 1 to 7, wherein the first insulating layer (221) contacts the second metal layer (ML2) and comprises silicon nitride, silicon oxide, or silicon oxynitride.

9. The display device (200) of at least one of claims 1 to 8, wherein the input sensor (220) further comprises a first dummy electrode (DE1) and a second dummy electrode (DE2),
wherein the sensing electrode comprises:
a first sensing electrode (SE1) comprising a first sensing pattern (SP2-1), a second sensing pattern (SP2-2) spaced apart from the first sensing pattern (SP2-1) in a first direction (DR1), and a bridge connecting the first sensing pattern (SP2-1) and the second sensing pattern (SP2-2); and
a second sensing electrode (SE2) comprising a first sensing part (SP1-1), a second sensing part (SP1-2), and an intermediate part (BP1) between the first sensing part (SP1-1) and the second sensing part (SP1-2) in a second direction crossing the first direction (DR1) and between the first sensing pattern (SP2-1) and the second sensing pattern (SP2-2) in the first direction (DR1),
wherein the first dummy electrode (DE1) is between the first sensing pattern (SP2-1) and the first sensing part (SP1-1) in a plan view and comprises a plurality of first portions spaced apart from each other,
wherein the second dummy electrode (DE2) is between the first sensing pattern (SP2-1) and the second sensing part (SP1-2) in the plan view and comprises a plurality of second portions spaced apart from each other, and
wherein a total number of first portions and a total number of second portions differ from each other.

10. The display device (200) of at least one of claims 1 to 8, wherein the input sensor (220) further comprises a first dummy electrode (DE1) and a second dummy electrode (DE2),
wherein the sensing electrode comprises:
a first sensing electrode (SE1) comprising a first sensing pattern (SP2-1), a second sensing pattern (SP2-2) spaced apart from the first sensing pattern (SP2-1) in a first direction (DR1), and a bridge connecting the first sensing pattern (SP2-1) and the second sensing pattern (SP2-2); and
a second sensing electrode (SE2) comprising a first sensing part (SP1-1), a second sensing part (SP1-2), and an intermediate part (BP1) between the first sensing part (SP1-1) and the second sensing part (SP1-2) in a second direction crossing the first direction (DR1) and between the first sensing pattern (SP2-1) and the second sensing pattern (SP2-2) in the first direction (DR1),
wherein the first dummy electrode (DE1) is between the first sensing pattern (SP2-1) and the first sensing part (SP1-1) in a plan view and comprises a plurality of first portions spaced apart from each other,
wherein the second dummy electrode (DE2) is between the first sensing pattern (SP2-1) and the second sensing part (SP1-2) in the plan view and comprises a plurality of second portions spaced apart from each other, and
wherein an arrangement of the plurality of first portions and an arrangement of the plurality of second portions are asymmetrical to each other with respect to a virtual line substantially parallel to the first direction (DR1) and passing through a center of a region defined by the first sensing part (SP1-1), the second sensing part (SP1-2), the first sensing pattern (SP2-1), and the second sensing pattern (SP2-2).

11. The display device (200) of at least one of claims 1 to 10, wherein the display panel (210) comprises a plurality of light emitting elements, and the sensing electrode overlaps a corresponding light emitting element among the plurality of light emitting elements.
